# EUROPEAN PATENT SPECIFICATION

(11) **EP 2 804 942 B1**
(45) Date of publication and mention of the grant of the patent: **31.10.2018**
(21) Application number: 12813354.3
(22) Date of filing: 21.12.2012
(51) Int. Cl.: C12C 12/04, C12G 3/02, C12G 3/08, C12G 3/06, C12C 5/02

(54) **LOW ALCOHOL OR ALCOHOL FREE FERMENTED MALT BASED BEVERAGE AND METHOD FOR PRODUCING IT**
ALKOHOLARMES ODER ALKOHOLFREIES FERMENTIERTES GETRÄNK AUF MALZBASIS UND HERSTELLUNGSVERFAHREN DAFÜR.
BOISSON À BASE DE MALT FERMENTÉ À FAIBLE TENEUR EN ALCOOL OU SANS ALCOOL ET SON PROCÉDÉ DE FABRICATION

(30) Priority: 16.01.2012 EP 12151245
(43) Date of publication of application: 26.11.2014
(73) Proprietor: Anheuser-Busch InBev S.A., 1000 Brussels (BE)
(72) Inventor: VANDERHAEGEN, Bart, B-3010 Kessel-lo (BE)
(74) Representative: BiiP cvba
(86) International application number: PCT/EP2012/076572
(87) International publication number: WO 2013/107598

(56) References cited:
- DE-U1-202005 021 293
- US-A- 6 162 360

## Description

### Technical Field

The present invention relates to a low alcohol or alcohol free fermented malt based beverage, such as beer having a flavour profile very close to regular lager beer. The present invention also concerns a method for producing such malt based beverage.

### Background for the invention

Low alcohol or alcohol free beers have different definitions depending on the national legislation of the different States. In the context of the present invention, a "low alcohol beer" is defined as a beer having an alcohol content of not more than 1.0 vol.%, and an "alcohol free beer" as a beer having an alcohol content of not more than 0.1 vol.%. The present invention concerns both types of beers, jointly referred to in the following as "NA beers", and including beers with even lower alcohol contents of not more than 0.05 vol.%. Attempts to produce NA beers having a flavour profile close to regular lager beers have had limited success in the past. The present invention also relates to fermented malt based beverages having an alcohol content of not more than 0,7 vol.%, preferably not more than 0,05 vol.%, and even more preferably not more than 0,05 vol.%.

One way of producing NA beer or fermented malt based beverages is to carry out normal fermentation of the wort and to remove the alcohol by distillation, evaporation, dialysis, or reverse osmosis techniques. These techniques involve high capital or energy costs, and have limited production rates. For example, DE202005021293U1 discloses such method for the production of non alcoholic Weissbier.

Alternatively, so called cold contact fermentation, as described e.g., in US6689401 and US5346706, allows to reduce the fermentation rate of sugars in contact with yeast, whilst by-products provided by the yeast are still present as in alcoholic lager beers, giving a distinct aroma thereto. NA beers produced by cold contact brewing, however, generally show an excess sweetness due to the presence of considerable amounts of unfermented sweet sugars. The expression "cold fermentation" has a well established and specific meaning to the person skilled in the art. Cold fermentation is a specific type of interrupted fermentation, as explained e.g., in the "Handbook of Brewing: Process, Technology, Markets", H.M. Eβlinger, Ed., Wiley-VCH (2009), pp. 238-239, wherein it is stated that
"The beer is not entirely fermented during the biological procedure, but fermentation is interrupted when the desired alcoholic content is reached. This is referred to as interrupted fermentation. If the fermentation takes place at particularly low temperatures, the method used is called the yeast cold-contact process. [...] As fermentation is interrupted at a desired alcoholic content, the beers receive a high fraction of non-fermented residual extracts -a fact that is reflected in their taste and flavour. These beers can show a sweet, worty character as well as a light body".

In some cases, the alcohol content of a beer needs be reduced by diluting it with water, with the obvious detrimental consequences on taste if too much water is needed to attain the target alcohol content (cf. e.g., US4970082).

It is a recurrent problem that low alcohol and alcohol free beers fails to reach a flavour profile comparable with the one of alcoholic lager beers. This is of course due to the differing production methods which, besides the lower amount of ethanol, also yield a differing concentration profiles of other components which are recognized as contributing to the overall flavour profile of a beer, such as esters, higher alcohols, sugars, and the like. Generally, regardless of whether low alcohol amounts are obtained by vacuum evaporation or by cold fermentation, the amounts of flavouring compounds produced by yeast are much lower than in alcoholic beers, giving a rather flat taste (or flat flavour profile), and an excess of sweetness for cold fermented NA beers..Flavouring compounds need be added separately to yield a more "beer like" flavour profile. As illustrated in Figure 7(a), flavouring compounds can be condensed from the vapour phase of the vacuum evaporation step. Alternatively or in combination therewith, individual flavouring compounds, in particular esthers and higher alcohols, can be purchased and added in the desired amounts to modify the flavour profile of a NA-beer. US61 62360 discloses an alternative method for modifying the taste profile of a NA-beer, by contacting one side of a semi-permeable membrane with a fully aromated beer, and the other surface of said membrane with the NA beer to "re-flavour". A fraction of the flavouring compounds of the fully aromated beer permeate through the semi-permeable membrane and reach the NA-beer.

The sensorial or flavour profile of a beer is detected by the tongue, which is sensitive to tastes such as sweetness, saltiness, sourness, and bitterness, as well as by the nose, which is sensitive to aromas. Since the nasal passage is connected to the throat and tongue, beer aroma volatile compounds are not only sniffed by the nose directly from the headspace above the glass but also through the mouth and throat, thus largely contributing to the overall sensorial or flavour profile of beers. Many components contribute to the aroma profile, which strongly interact with one another. Although said interactions are quite complex and poorly known, it is generally accepted that esters and higher alcohols yield a major contribution to the aroma of a beer. In particular, esters such as ethyl acetates (alcoholic, sweet) and so called isoamyl acetates, which are a mixture of 2-methylbutyl acetate and 3-methylbutyl acetate (banana, fruitiness), and higher alcohols such as (iso)amyl-, alkyl-, phenyl-alcohols, and the like, are particularly important for the aroma perception of a beer. A higher alcohol is meant here, as well known in the art, to refer to an alcohol having a molecular weight higher than ethanol.

Since esters are formed from their respective alcohols, amending the beer production process may vary the esters concentrations. It has therefore been proposed to simply compare the esters and higher alcohols concentration profiles between alcoholic and non-alcoholic beers, and modify the latter to match the concentration profiles of the alcoholic lager beers. Surprisingly, however, this solution yields very disappointing results with flavour profiles of thus modified NA beers totally distinct from the ones of alcoholic lager beers.

The substantially lower amount of ethanol in NA beers affects the taste and aroma profile because the NA beer lacks the warming character, often referred to as 'alcoholic', conferred by ethanol present in alcoholic lager beers at levels at least two orders of magnitude higher than any other alcohol. The (quasi-) absence of ethanol, however, also affects the aroma profile of NA-beers by amending the partitioning of flavour components between the liquid beer, foam and the headspace above the beer. In other words, the amount of ethanol in a beer affects the release rate of aroma volatile compounds contained therein and thus substantially modifies the aroma profiles of NA beers. This explains, at least partly, why matching the concentration profiles in esters and higher alcohols of NA beers to the ones of alcoholic lager beers did not work. It must be accepted that the lack of ethanol in NA beers upsets the whole aroma profile in a way that is poorly defined and many brewers struggle to identify how to restore the aroma profile of NA beers to levels comparable with the ones of alcoholic lager beers.

The present invention proposes an alcohol free or low alcohol fermented malt based beverage having an aroma profile, and overall sensorial profile; close to profiles typical of alcoholic lager beers.

### Summary of the invention

The present invention is defined in the appended independent claims. Preferred embodiments are defined in the dependent claims.

In particular, the present invention concerns an alcohol free or low alcohol fermented malt based beverage such as beer having an alcohol content of not more than 1.0 vol.%, preferably not more than 0.7 vol.%, **characterized in that it** comprises 7.00-30.00 ppm ethyl acetate and 0.01-0.20 ppm ethyl butyrate.

In a preferred embodiment, the NA-beer of the present invention further comprises one or more of the following esters:
(a) 8.00-28.00 ppm ethyl acetate, preferably 13.00-22.00 ppm, more preferably 15.00-20.00 ppm;
(b) 0.05-2.00 ppm isoamyl acetate (=2-methylbutyl acetate + 3-methylbutyl acetate), preferably 0.08-0.85 ppm, more preferably 0.27-0.65 ppm, most preferably 0.31-0.49 ppm;
(c) 0.01-0.10 ppm ethyl butyrate, preferably 0.02-0.05 ppm, more preferably 0.028-0.045 ppm, most preferably 0.03-0.04 ppm;
(d) 0.01-0.05 ppm ethyl hexanoate, preferably 0.015-0.04 ppm, more preferably 0.02-0.03 ppm, most preferably 0.023-0.027 ppm;
And/or the following higher alcohol:
(w) 5.00-30.00 ppm (iso-)amyl alcohol, preferably 10.00-25.00 ppm, more preferably 12.00-22.00 ppm, most preferably 14-20 ppm.
Wherein a higher alcohol is defined as n alcohol of molecular weight higher than ethanol.

The beverage of the present invention preferably further comprises the following ester:
(e) 0.005-0.4 ppm phenylethyl acetate, preferably 0.08-0.15 ppm;
And one or more of the following higher alcohols:
(x) 0.85-5.00 ppm phenylehtyl alcohol;
(y) 1.65-5.05 ppm isobutanol;
(z) 3.80-24.00 ppm propanol .

The present invention also concerns a method for producing an alcohol free or low alcohol fermented malt based beverage having an alcohol content of not more than 1.0 vol.%, preferably not more than 0.7 vol.%, comprising the following steps:
(a) Preparing a malt based beverage having an alcohol content of not more than 1.0 vol.%, preferably not more than 0.7 vol.% by fermenting a malt suspension;
(b) Measuring the contents of ethyl acetate and ethyl butyrate in the thus obtained beverage; and
(c) Adding to or extracting from said beverage:
   - ethyl acetate until an ethyl acetate content comprised between 7.00 and 30.00 ppm is obtained, and
   - ethyl butyrate until an ethyl butyrate content comprised between 0.01 and 0.20 ppm is obtained.

An alcohol content of not more than 1.0 vol.%, preferably not more than 0.7 vol.% in the beverage prepared in step (a) may be obtained by stopping the fermentation process, or by extracting ethanol from a fermented beverage.

In a preferred embodiment, the contents obtained in the beverage prepared in step (a) are measured for the following compounds: isoamyl acetate (=2-methylbutyl acetate + 3-methylbutyl acetate), ethyl butyrate, ethyl hexanoate, and (iso-)amyl alcohol, and the contents of each of the foregoing compounds is modified by addition or extraction such as to reach the following concentrations:
- 0.05-2.00 ppm isoamyl acetate, preferably 0.08-0.85 ppm, more preferably 0.27-0.65 ppm, most preferably 0.31-0.49 ppm;
- 0.01-0.10 ppm ethyl butyrate, preferably 0.02-0.05 ppm, more preferably 0.03-0.04 ppm;
- 0.01-0.05 ppm ethyl hexanoate preferably 0.015-0.04 ppm, more preferably 0.02-0.03 ppm, most preferably 0.023-0.027 ppm; and/or
- 5.00-30.00 ppm (iso-)amyl alcohol, preferably 10.00-25.00 ppm, more preferably 12.00-22.00 ppm, most preferably 14-20 ppm.

It is preferred that the content of ethyl acetate in the beverage be modified such as to obtain a concentration of ethyl acetate comprised between 8.00 and 28.00, preferably between 13.00 and 22.00, more preferably between 15.00-20.00 ppm.

The contents obtained in the beverage prepared in step (a) are preferably measured for the following compounds: phenylethyl acetate, phenyl alcohol, isobutanol, and propanol, and the contents of each of the foregoing compounds may be modified by addition or extraction such as to reach the following concentrations:
- 0.005-0.4 ppm phenylethyl acetate, preferably 0.05-0.15 ppm;
- 0.85-5.00 ppm phenylehtyl alcohol;
- 1.65-5.05 ppm isobutanol;
- 3.80-24.00 propanol .

### Brief description of the Figures

For a fuller understanding of the nature of the present invention, reference is made to the following detailed description taken in conjunction with the accompanying drawings in which:
- Figure 1:: shows the main steps of a beer brewing process.
- Figure 2:: shows graphically the contents in a series of NA beers available on the market of (a) ethyl acetate, (b) isoamyl acetate, (c) ethyl butyrate, (d) ethyl hexanoate, (e) amyl alcohol.
- Figure 3:: shows graphically the relative contents of a number of aroma volatile compounds of NA beers according to the present invention compared with an alcoholic lager beer.
- Figure 4:: shows the evolution of αi of a given volatile aroma component as a function of the ethanol content in the NA beer relative to the target alcoholic beer.
- Figure 5:: shows graphically the flavour threshold of flavouring compounds determined in alcoholic beer and in water.
- Figure 6:: compares graphically the concentration profile of the present invention with the concentrations of NA beers disclosed in US61 62360.

### Detailed description of the invention

The fermented malt based beverage of the present invention has an alcohol content of not more than 1.0 vol.%, preferably not more than 0.7 vol.%, and may even have alcohol contents of not more than 0.1 vol.% or even 0.05 vol.% with a flavour profile which remains very close to normal lager beer. The flavour profile of a beer is a very complex issue dependent on taste and aroma profiles and is usually assessed by a panel of experts marking several dozens of parameters such as sweetness, fruitiness, bitterness, after-bitterness, caramel note, worty note, and the like. Although some flavour characteristics may be associated with a specific component, such as bitterness being associated with the presence of hops, the overall flavour profile is beyond a full understanding, as there are a myriad of parameters controlling it: types and contents of the components used, time-temperature profiles, pH, etc. Any change in one of said parameters, affects the overall flavour profile of a beer. The present invention focuses on the matching of the aromas profile of NA beers with the one of traditional alcoholic lager beers.

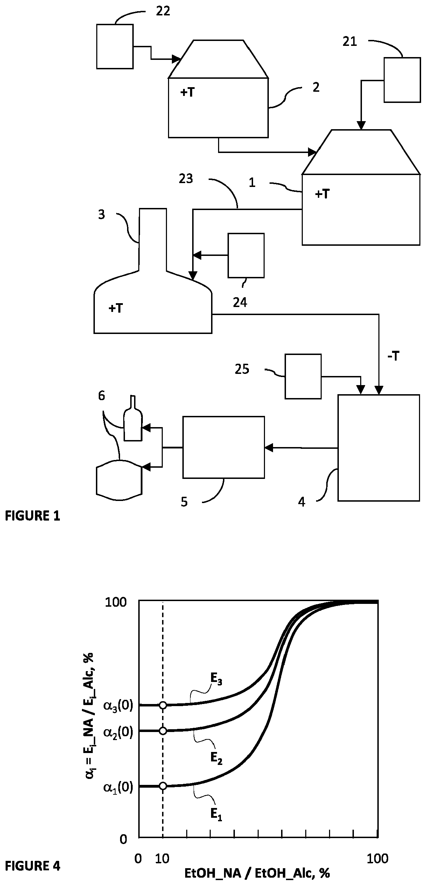

A typical brewing process involves the main steps schematically depicted in Figure 1. Malt (21) is mashed in a mash tun (1) to transform starch into sugars. It is possible to add thereto grain grits (22) previously cooked in a cereal cooker (2). When mashing is over, mixture is transferred to lautering where the solid phase is separated from the liquid wort (23), the latter being loaded in a copper (3), sometimes also called kettle. The wort is boiled and hops (24) are added, giving to beer its distinct bitter taste. During this stage, many reactions, such as Maillard reactions, occur, developing various flavours and aroma characteristic of each beer. At the end of the boil, the hopped wort is clarified and cooled down prior to transferring it into a fermentation tank (4) where the fermentable sugars, in presence of yeast (25), will be transformed into alcohol and CO₂. After fermentation is completed, the liquid is conditioned for several days or even weeks in conditioning tanks (5) until the beer has matured and is ready to be bottled or transferred into kegs (6).

The alcohol content in the beer can be decreased either by interrupting the fermentation process, or by ethanol extraction from a fully fermented beer. In the former case, the esters and higher alcohols concentration profiles will differ more from the concentrations profiles of an alcoholic beer than in the latter technique. This is not to say, however, that the flavour profile of a non-alcoholic beer processed by ethanol extraction is closer to the one of an alcoholic lager beer, than a non-alcoholic beer obtained by interruption of the fermentation. Indeed, a non-alcoholic beer is generally characterized by a lower ethanol concentration and higher sugars contents than alcoholic lager beers. Decreasing the ethanol content and increasing sugars contents generally accelerates the release rates of most esters and higher alcohols -herein referred to in combination as 'aroma volatile compounds'- into the foam and headspace above the beer, thus increasing their intensity in the overall flavour profile detected by a consumer. This explains why matching the concentration profiles of the various aroma volatile compounds with the one of typical alcoholic lager beers did not yield the expected flavour profiles. If the intensity of an aroma volatile compound is higher in an NA beer than in an alcoholic lager beer, its concentration should be decreased accordingly to match the aroma profile of said alcoholic lager beer.

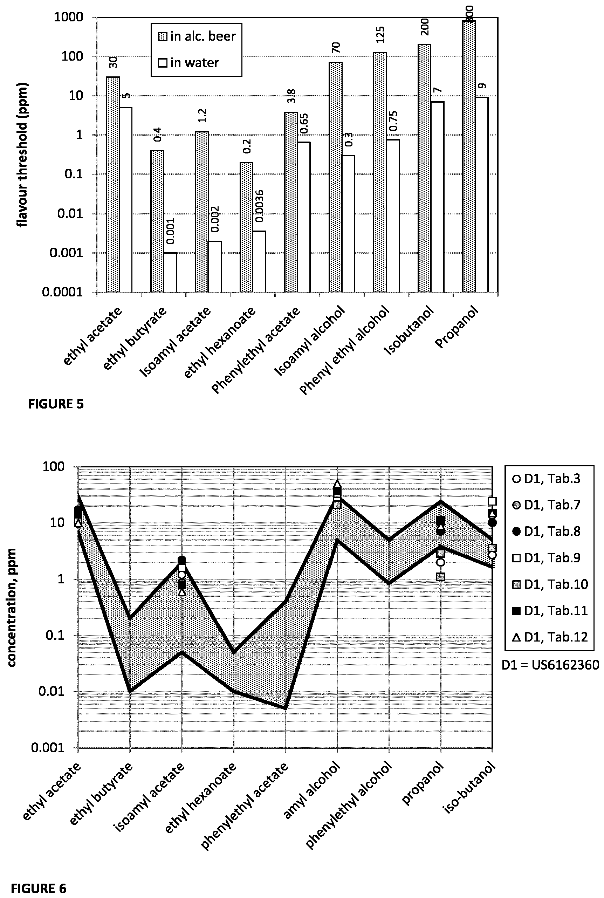

The release rate of each ester and higher alcohol varies differently as a function of the sugars and ethanol concentrations in beer. Figure 5 illustrates the flavour threshold of a series of flavouring compounds when present in alcoholic beer, and in water. Such results are generated by test panels tasting a number of mixtures with increasing concentration of a given flavouring compound. It can be seen that the flavour threshold of a flavouring compound in water (white columns) can be three orders of magnitude lower than in beer (shaded columns) (note that the scale of the ordinate axis is logarithmic). For example, ethyl butyrate has a flavour threshold of 0.4 ppm in beer, but 0.001 ppm (= 1 ppb) is sufficient to be detected in water. The flavour threshold of a given flavouring compound in any NA beer (of lower ethanol content) is comprised between the values indicated in Figure 5 determined in alcoholic beer and in water, respectively.

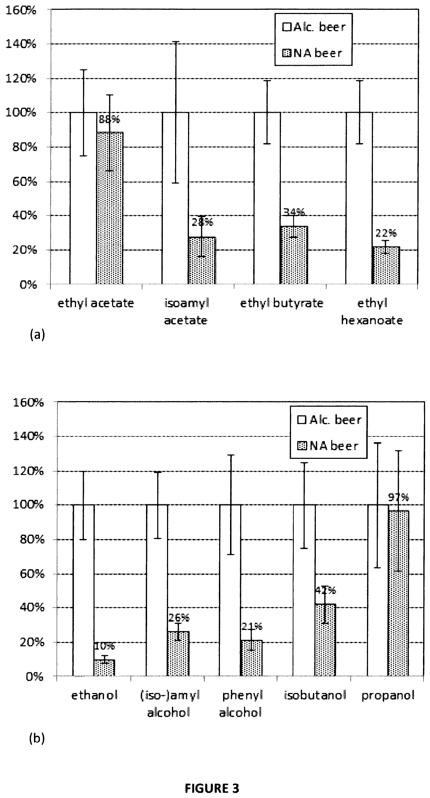

Figure 3 illustrates graphically an example of concentration profiles of various (a) esters and (b) alcohols in a NA beer according to the present invention (Figure 3, grey columns) relative to the corresponding average concentrations in alcoholic beers measured in a selection of lager beers (Figure 3, white columns set at 100%). The results illustrated in Figure 3 were obtained with a series of tasting sessions by an experts panel following an experimental design. The error bars represent the concentrations standard deviations of the various alcoholic beers taken as references and of the results given by the members of the panel. It can be seen that the concentration profiles of aroma volatile compounds in NA beers have lower values than in alcoholic beers, in order to take account of the higher release rates triggered by the higher amounts of sugars and lower content of ethanol in the former. A concentration reduction factor, αᵢ, can also be estimated for each aroma volatile compound, i, defined as the ratio of the concentration of an aroma volatile compound, i, in NA beer to the concentration thereof in a typical alcoholic beer. The concentration reduction factors, αᵢ, are indicated on top of the grey columns in Figure 3, for each aroma volatile compound. It can be seen that each aroma volatile compound has a different concentration reduction factor, depending on the effect the higher sugars and lower ethanol contents in NA beers has on the magnitude of the release rate variations of each aroma volatile compound. The concentration reduction factors, αᵢ, vary from 22% to 88% for esters (Figure 3(a)) and from 21% to 97% for higher alcohols (Figure 3(b)). It must be noted that the concentration reduction factors, αᵢ, are not universal magnitudes, and their values depend *inter alia* on the ethanol concentration and sugars contents in a given non-alcoholic beer.

Figure 4 illustrates schematically how various aroma volatile compounds, Eᵢ = E₁, E₂, E₃ ... can have different values of their concentration reduction factor, αᵢ, depending on the amount of ethanol (EtOH) in the beer. In order to obtain a dimensionless abscissa, the ethanol content in NA beer is normalized with respect to the ethanol content in the target alcoholic beer, EtOH_NA / EtOH_Alc. The curves E₁, E₂, E₃ of Figure 4 can be constructed by introducing the values of αᵢ determined for each volatile aroma compound for different values of the relative ethanol content EtOH_NA / EtOH_Alc. In the Example illustrated in Figure 3, it can be seen that the ethanol ratio, EtOH_NA / EtOH_Alc= 10% (cf. Figure 3(b)). The white circles illustrate the principle of this exercise for EtOH_NA / EtOH_Alc = 10% as they were determined in Figure 3. A similar exercise with an experts panel can be repeated for different values of the relative ethanol content, until the shapes of the various curves can be interpolated. All the curves substantially reach the value (1,1) (top right of the graph), because the influence of ethanol content on the release rate of the various volatile aroma compounds seems to be dominant over the influence of other components. These curves are important, as they can be used as master curves giving relevant indications on the amounts of the different volatile aroma compounds needed to produce a NA beer of given ethanol content, which aroma profile matches any alcoholic beer taken as target.

The contribution of ethyl acetate is considered to be particularly important in the overall flavour profile of NA beers, since this ester formed from ethanol somehow compensates for the loss of 'alcoholic' aroma or warming character' of NA beers attributed to the lower ethanol contents. Furthermore, ethyl acetate is relatively hydrophilic and its release rate is therefore not substantially increased by the lower content of ethanol. It can be seen in the example represented in Figure 3, that this is confirmed by a concentration reduction factor, α = 88% for ethyl acetate. According to the present invention, ethyl acetate should be present in a NA beer in a concentration ranging from 7.00 and 30.00 ppm.

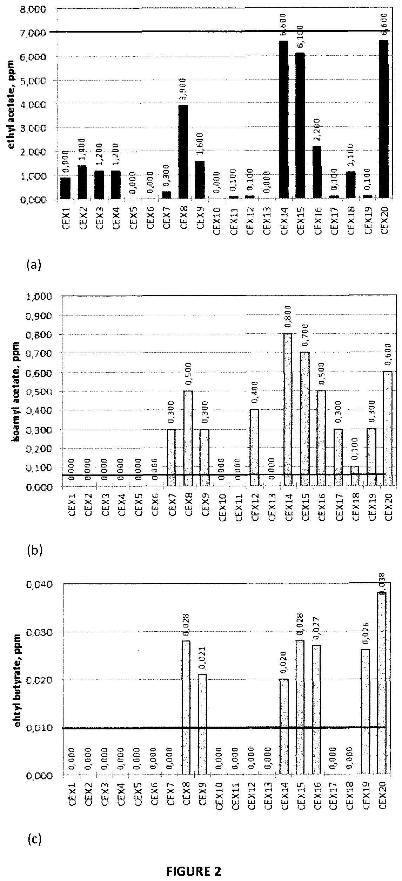

Table 1 lists the concentrations of a number of aroma volatile compounds measured on a selection of non-alcoholic beers available on the market, marked as comparative examples (= CEX) and of two concentrations profiles according to the present invention marked as examples (= EX). It is surprising to observe that all the comparative beers on the market comprise relatively small amounts of ethyl acetate, with a maximum of 6.6 ppm in CEX14 and with contents below detection threshold in CEX5, 6, and 10. The ethyl acetate concentrations measured in the comparative beers are represented graphically in Figure 2(a). The columns marked in black are out of the scope of the present invention, which is the case of all of CEX1-20 with concentrations below the lower boundary of 7.00 ppm of the present invention indicated with a thick solid line. It is preferred that a NA beer according to the present invention comprises 8.00-28.00 ppm ethyl acetate, preferably 13.00-22.00 ppm, more preferably 15.00-20.00 ppm.

**Table 1: concentrations of aroma volatile compounds in NA beers according to the present invention (= EX) and measured on a selection of NA beers available on the market (= CEX)**

| | **ethyl acetate** | **isoamyl acetate** | **ethyl butyrate** | **ethyl hexanoate** | **amyl alcohol** |
|---|---|---|---|---|---|
| EX1 | 16,900 | 0,590 | 0,037 | 0,030 | 16,730 |
| EX2 | 18,130 | 0,210 | 0,034 | 0,021 | 14,640 |
| CEX1 | 0,900 | 0,000 | 0,000 | 0,012 | 6,000 |
| CEX2 | 1,400 | 0,000 | 0,000 | 0,013 | 7,000 |
| CEX3 | 1,200 | 0,000 | 0,000 | 0,012 | 5,000 |
| CEX4 | 1,200 | 0,000 | 0,000 | 0,012 | 5,000 |
| CEX5 | 0,000 | 0,000 | 0,000 | 0,000 | 0,000 |
| CEX6 | 0,000 | 0,000 | 0,000 | 0,000 | 1,000 |
| CEX7 | 0,300 | 0,300 | 0,000 | 0,022 | 4,000 |
| CEX8 | 3,900 | 0,500 | 0,028 | 0,028 | 6,000 |
| CEX9 | 1,600 | 0,300 | 0,021 | 0,024 | 9,000 |
| CEX10 | 0,000 | 0,000 | 0,000 | 0,000 | 2,000 |
| CEX11 | 0,100 | 0,000 | 0,000 | 0,012 | 2,000 |
| CEX12 | 0,100 | 0,400 | 0,000 | 0,178 | 3,000 |
| CEX13 | 0,000 | 0,000 | 0,000 | 0,011 | 1,000 |
| CEX14 | 6,600 | 0,800 | 0,020 | 0,022 | 16,000 |
| CEX15 | 6,100 | 0,700 | 0,028 | 0,024 | 16,000 |
| CEX16 | 2,200 | 0,500 | 0,027 | 0,045 | 18,000 |
| CEX17 | 0,100 | 0,300 | 0,000 | 0,024 | 4,000 |
| CEX18 | 1,100 | 0,100 | 0,000 | 0,012 | 7,000 |
| CEX19 | 0,100 | 0,300 | 0,026 | 0,380 | 9,000 |
| CEX20 | 6,600 | 0,600 | 0,038 | 0,053 | 12,000 |

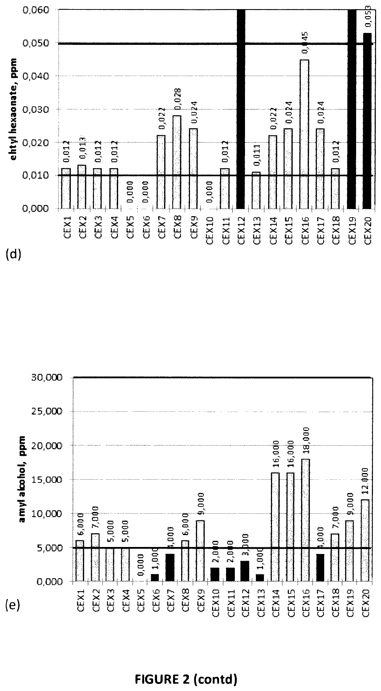

Ethyl butyrate is present in a NA beer according to the present invention in an amount of 0.01-0.20 ppm, preferably of 0.01-0.10 ppm, more preferably 0.02-0.05 ppm, most preferably 0.028-0.045 ppm, and even 0.03-0.04 ppm. Ethyl butyrate confers an apple flavour to the beverage. Figure 2(c) represents graphically the contents of ethyl butyrate measured in the comparative NA beers CEX-20. It can be seen that many of the comparative NA beers comprise substantially no ethyl butyrate (cf. CEX1-7, 10-13, 17, and 18). Ethyl butyrate is produced by yeast during fermentation and contributes a distinctive positive tropical fruit ester character to beer. Ethyl butyrate is one of a range of butyrate esters found in beer. Such flavours are important in defining the character of several major lager beer brands. For instance a publication reports a panel panel having seen ethyl butyrate in: Alaskan Winter Ale, Hair of the Dog Blue Dot, Stone Levitation, Coors Blue Moon, Deschutes Twilight, Stone Belgian IPA (cf. http://beersensoryscience.wordpress.com/2011/02/04/esters/). The flavour threshold value of ethyl butyrate determined in beer is 0.4 ppm. In water, however, the threshold value drops to 0.001 ppm (= 1 ppb). In NA beer, the threshold value is comprised between these two values, and is to be determined by a taste panel for a NA beer of given alcohol content. For a very low alcohol contents, it was determined that the threshold value of ethyl butyrate was 0.01 ppm. For beers containing 1 vol.% ethanol, ethyl butyrate contributed optimally to the flavour profile with a concentration of 0.2 ppm.
Other esters yield a substantial contribution to the overall aroma profile of a beer. In particular, in a preferred embodiment the NA beer of the present invention further comprises 0.05-2.00 ppm isoamyl acetate, preferably 0.08-0.85 ppm, more preferably 0.27-0.65 ppm, most preferably 0.31-0.49 ppm. Isoamyl acetate is actually a mixture of 2- and 3-methylbutyl acetates and contributes to a fruity aroma, particularly banana. Figure 2(b) represents graphically the contents of isoamyl acetate measured in the comparative NA beers CEX1-20.
Ethyl hexanoate is preferably present in a NA beer according to the present invention in an amount of 0.01-0.05 ppm, preferably 0.015-0.04 ppm, more preferably 0.02-0.03 ppm, most preferably 0.023-0.027 ppm. Ethyl hexanoate has a red apple flavour. The concentrations of ethyl hexanoate measured in the comparative beers CEX1-20 are represented in Figure 2(d), the black columns indicating the CEX having an ethyl hexanoate concentration out of the 5.00-30.00 ppm range.

Phenyl ethyl acetate releases a rose like flavour and is preferably present in an amount of 0.005-0.40 ppm, preferably between 0.01-0.190 ppm, more preferably 0.08-0.15 ppm.

Higher alcohols also contribute to the aroma profile of a beer, such as (iso-) amyl alcohol which confers an alcoholic (warming character) as well as a fruity flavours to a beer. As well known in the art, (iso)amyl alcohol is defined as the sum of 3-methyl butanol and 2-methyl butanol. It is preferably present in an amount of 5.00-30.00 ppm (iso-)amyl alcohol, preferably 10.00-25.00 ppm, more preferably 12.00-22.00 ppm, most preferably 14-20 ppm. Figure 2(e) illustrates graphically the (iso-) amyl alcohol concentrations measured in the prior art NA beers CEX1-20, wherein the black columns indicate the CEX comprising (iso-) amyl alcohol out of the 5.00-30.00 ppm range.

Other higher alcohols contributing to the aroma profile of a beer are:
- phenylehtyl alcohol, which gives an alcoholic (warming character) as well as a rose like flavours, and is preferably present in an amount of 0.85-5.00 ppm, preferably of 1.00-3.20 ppm;
- isobutanol, which gives a warming character (alcoholic) Is preferably present in an amount of 1.65-5.05 ppm;
- propanol, which gives a warming character (alcoholic) Is preferably present in an amount of 3.80-24.00 ppm.

The shaded area defined by the lower and higher concentration boundaries indicated by a thick, continuous lines represented in Figure 6 illustrates graphically the concentration profile of a NA beer according to the present invention (note that the ordinate scale is logarithmic). The data indicated in the graph come from US61623660, disclosing a NA beer "re-flavoured" by contacting one face of a semi permeable membrane with a fully aromated (alcoholic) beer, and the other face with the NA beer to be "re-flavoured". It can be seen that two esthers only are reported, viz., ethyl acetate and isoamyl acetate. It is not clear whether other esthers, such as ethyl butyrate, ethyl hexanoate, phenylethyl acetate, are not present in the NA beer, or if they were not measured. The latter option seems quite unrealistic since said esthers are the most representative flavouring compounds characterizing the flavour profile of a beer. It is pobable that the semi-permeable membrane does not let all the flavouring compounds flow through from the alcoholic beer towards the NA beer, and for some compounds, present in smaller amounts due to their lower threshold values, do not yield sufficient concentration gradient to drive the flow across the membrane.
A non-alcoholic beer according to the present invention can be prepared by the following steps:
(a) Preparing a malt based beverage having an alcohol content of not more than 1.0 vol.%, preferably not more than 0.7 vol.% by fermenting a malt suspension;
(b) Measuring the content of ethyl acetate in the thus obtained beverage; and
(c) Adding to or extracting from said beverage ethyl acetate until an ethyl acetate content comprised between 7.00 and 30.00 ppm is obtained.
As discussed above, an alcohol content of not more than 1.0 vol.%, preferably not more than 0.7 vol.% in the beverage prepared in step (a) can be obtained by methods known in the art. For instante, the fermentation process can be stopped by e.g., cold fermentation or, alternatively, ethanol can be extracted from a fermented beverage. Volatiles comprised in a normally fermented beer can be extracted by iknown methods, such as vacuum evaporation. Vacuum evaporation extract ethanol (EtOH) but also other flavouring compounds, which absence yields a very dull flavour profile to the thus obtained NA beer, The concentrations of the various flavouring compounds can be measured by standard procedures, and the flavouring components being present in concentrations below the target values can be completed by addition of the corresponding amount of said compound. Flavouring compounds are available on the market and can be used to fashion the desired flavour profile. Alternatively, or in combination therewith, the evaporated volatiles can be condensed, taking care of eliminating ethanol and the condensate can be added to the NA beer in an amount depending on the composition thereof. This solution allows to approach the desired flavour profile with the flavouring compounds present in the condensate, and to fine tune the profile by addition of flavouring compounds from the market. For NA beers obtained by cold fermentation, the flavour profile must be fashioned to the desire profile by addition of individual flavouring compounds.

The concentrations of other esters and of higher alcohols can also be measured and said esters and higher alcohols be added to or removed from the beverage to reach the concentrations ranges discussed supra.
Based on experts panels tasting sessions, it was concluded that non-alcoholic beers according to the present invention have an overall flavour profile closer to the ones typical of alcoholic lager beers, than the comparative NA beers CEX1-20, thanks to a closer match of the aroma profiles between non-alcoholic and alcoholic beers than ever achieved to date, with; in particular; higher amounts of ethyl acetate than traditionally found in NA beers.

## Claims

1. Alcohol free or low alcohol fermented malt based beverage having an alcohol content of not more than 1.0 vol.%, preferably not more than 0.7 vol.%, comprising esters and higher alcohols defining a flavouring profile close to a lager beer, wherein a higher alcohol is an alcohol having a molecular weight higher than ethanol, **characterized in that** it comprises (a) 7.00-30.00 ppm ethyl acetate and (b) 0.01-0.20 ppm ethyl butyrate.

2. Beverage according to claim 1, comprising one or more of the following esters:
(c) 0.05-2.00 ppm isoamyl acetate;
(d) 0.01-0.05 ppm ethyl hexanoate.

3. Beverage according to the preceding claim, comprising one or more of the following esters:
(a) 8.00-28.00 ppm ethyl acetate, preferably 13.00-22.00 ppm, more preferably 15.00-20.00 ppm;
(b) 0.01-0.10 ppm ethyl butyrate, preferably 0.02-0.05 ppm, more preferably 0.028-0.045 ppm, most preferably 0.03-0.04 ppm;
(c) 0.08-0.85 ppm isoamyl acetate, preferably 0.27-0.65 ppm, more preferably 0.31-0.49 ppm;
(d) 0.015-0.04 ppm ethyl hexanoate, preferably 0.02-0.03 ppm, more preferably 0.023-0.027 ppm;
and the following higher alcohol:
(w) 5.00-30.00 ppm (iso-)amyl alcohol, preferably 10.00-25.00 ppm, more preferably 12.00-22.00 ppm, most preferably 14.00-20.00 ppm, wherein (iso)amyl alcohol is defined as the sum of 3-methyl butanol and 2-methyl butanol, and wherein a higher alcohol is defined as an alcohol having a molecular weight higher than ethanol.

4. Beverage according to claim 1 or 2, further comprising the following ester:
(e) 0.005-0.4 ppm phenylethyl acetate, preferably 0.05-0.15 ppm;
And one or more of the following higher alcohols:
(x) 0.85-5.00 ppm phenylehtyl alcohol;
(y) 1.65-5.05 ppm isobutanol;
(z) 3.80-24.00 ppm propanol.

5. Method for producing an alcohol free or low alcohol fermented malt based beverage having an alcohol content of not more than 1.0 vol.%, preferably not more than 0.7 vol.%, and having a flavour profile close to lager beers, said method comprising the following steps:
(a) Preparing a malt based beverage having an alcohol content of not more than 1.0 vol.%, preferably not more than 0.7 vol.% by fermenting a malt suspension;
(b) Measuring the contents of ethyl acetate and ethyl butyrate in the thus obtained beverage; and
(c) Adding to or extracting from said beverage:
• ethyl acetate until an ethyl acetate content comprised between 7.00 and 30.00 ppm is obtained, and
• ethyl butyrate until an ethyl butyrate content comprised between 0.01 and 0.20 ppm is obtained.

6. Method according to the preceding claim, wherein an alcohol content of not more than 1.0 vol.%, preferably not more than 0.7 vol.% in the beverage prepared in step (a) is obtained by stopping the fermentation process, or by extracting ethanol from a fermented beverage.

7. Method according to claim 5 or 6, wherein the contents obtained in the beverage prepared in step (a) are measured for the following compounds: isoamyl acetate, ethyl butyrate, ethyl hexanoate, and (iso-)amyl alcohol, wherein (iso)amyl alcohol is defined as the sum of 3-methyl butanol and 2-methyl butanol, and the contents of each of the foregoing compounds is modified by addition or extraction such as to reach the following concentrations:
• 0.05-2.00 ppm isoamyl acetate, preferably 0.08-0.85 ppm, more preferably 0.27-0.65 ppm, most preferably 0.31-0.49 ppm;
• 0.01-0.10 ppm ethyl butyrate, preferably 0.02-0.05 ppm, more preferably 0.03-0.04 ppm;
• 0.01-0.05 ppm ethyl hexanoate preferably 0.015-0.04 ppm, more preferably 0.02-0.03 ppm, most preferably 0.023-0.027 ppm; and
• 5.00-30.00 ppm (iso-)amyl alcohol, preferably 10.40-23.55 ppm, more preferably 12.00-22.00 ppm, most preferably 14.00-20.00 ppm.

8. Method according to any of claims 5 to 7, wherein the content of ethyl acetate in the beverage is modified such as to obtain a concentration of ethyl acetate comprised between 8.00 and 28.00, preferably between 13.20 and 22.00, more preferably between 15.00-20.00 ppm.

9. Method according to any of claims 5 to 8, wherein the contents obtained in the beverage prepared in step (a) are measured for the following compounds: phenylethyl acetate, phenyl alcohol, isobutanol, and propanol, and the contents of each of the foregoing compounds is modified by addition or extraction such as to reach the following concentrations:
• 0.005-0.4 ppm phenylethyl acetate, preferably 0.05-0.15 ppm;
• 0.85-5.00 ppm phenylehtyl alcohol;
• 1.65-5.05 ppm isobutanol;
• 3.80-24.00 ppm propanol.

10. Method according to any of claims 5 to 9, wherein the malt based beverage is obtained in step (a) by dealcoholisation of alcoholic beer, by evaporation, preferably vacuum evaporation, and wherein part of the vapour phase, excluding ethanol, is condensed, and wherein addition of flavouring compounds of step (c) is achieved by adding at least part of the condensate to the malt based beverage and, optionally by further adding individual flavour compounds.

## Patentansprüche

1. Alkoholfreies oder alkoholarmes fermentiertes Getränk auf Malzbasis mit einem Alkoholgehalt von nicht mehr als 1,0 Vol.-%, vorzugsweise nicht mehr als 0,7 Vol.-%, umfassend Ester und höheren Alkohol, definierend ein aromatisierendes Profil ähnlich einem Lagerbier, wobei ein höherer Alkohol ein Alkohol mit einem höheren Molekulargewicht als Ethanol ist, **dadurch gekennzeichnet, dass** es a) 7,00-30,00 ppm Ethylacetat und b) 0,01-0,20 ppm Ethylbutyrat umfasst.

2. Getränk nach Anspruch 1, umfassend einen oder mehrere der folgenden Ester:
(c) 0,05-2,00 ppm Isoamylacetat;
(d) 0,01-0,05 ppm Ethylhexanoat.

3. Getränk nach dem vorstehenden Anspruch, umfassend einen oder mehrere der folgenden Ester:
(a) 8,00-28,00 ppm Ethylacetat, vorzugsweise 13,00-22,00 ppm, noch bevorzugter 15,00-20,00 ppm;
(b) 0,01-0,10 ppm Ethylbutyrat, vorzugsweise 0,02-0,05 ppm, noch bevorzugter 0,028-0,045 ppm, am bevorzugtesten 0,03-0,04 ppm;
(c) 0,08-0,85 ppm Isoamylacetat, vorzugsweise 0,27-0,65 ppm, noch bevorzugter 0,31-0,49 ppm;
(d) 0,015-0,04 ppm Ethylhexanoat, vorzugsweise 0,02-0,03 ppm, noch bevorzugter 0,023-0,027 ppm;
und den folgenden höheren Alkohol:
(w) 5,00-30,00 ppm (Iso)amylalkohol, vorzugsweise 10,00-25,00 ppm, noch bevorzugter 12,00-22,00 ppm, am bevorzugtesten 14,00-20,00 ppm, wobei (Iso)amylalkohol als die Summe von 3-Methylbutanol und 2-Methylbutanol definiert ist und wobei ein höherer Alkohol als ein Alkohol mit einem höheren Molekulargewicht als Ethanol definiert ist.

4. Getränk nach Anspruch 1 oder 2, weiter umfassend den folgenden Ester:
(e) 0,005-0,4 ppm Phenylethylacetat, vorzugsweise 0,05-0,15 ppm;
und einen oder mehrere der folgenden höheren Alkohole:
(x) 0,85-5,00 ppm Phenylethylalkohol;
(y)1,65-5,05 ppm Isobutanol;
(z)3,80-24,00 ppm Propanol.

5. Verfahren zur Herstellung eines alkoholfreien oder alkoholarmen fermentierten Getränks auf Malzbasis mit einem Alkoholgehalt von nicht mehr als 1,0 Vol.-%, vorzugsweise nicht mehr als 0,7 Vol.-%, und mit einem Aromaprofil ähnlich Lagerbieren, wobei das Verfahren die folgenden Schritte umfasst:
(a) Vorbereiten eines Getränks auf Malzbasis mit einem Alkoholgehalt von nicht mehr als 1,0 Vol.-%, vorzugsweise nicht mehr als 0,7 Vol.-%, durch Fermentieren einer Malzsuspension;
(b) Messen der Gehalte an Ethylacetat und Ethylbutyrat in dem so erhaltenen Getränk; und
(c)Zusetzen zu oder Extrahieren aus dem Getränk von:
• Ethylacetat, bis ein Ethylacetatgehalt zwischen 7,00 und 30,00 ppm erhalten wird, und
• Ethylbutyrat, bis ein Ethylbutyratgehalt zwischen 0,01 und 0,20 ppm erhalten wird.

6. Verfahren nach dem vorstehenden Anspruch, wobei ein Alkoholgehalt von nicht mehr als 1,0 Vol.-%, vorzugsweise nicht mehr als 0,7 Vol.-%, in dem in Schritt a) vorbereiteten Getränk durch Stoppen des Fermentierungsprozesses oder durch Extrahieren von Ethanol aus einem fermentierten Getränk erhalten wird.

7. Verfahren nach Anspruch 5 oder 6, wobei die Gehalte, die in dem in Schritt (a) vorbereiteten Getränk erhalten wurden, für die folgenden Verbindungen gemessen werden: Isoamylacetat, Ethylbutyrat, Ethylhexanoat und (Iso)amylalkohol, wobei (Iso)amylalkohol als die Summe von 3-Methylbutanol und 2-Methylbutanol definiert ist, und die Gehalte an jeder der vorstehenden Verbindungen durch Zusetzen oder Extrahieren modifiziert werden, um die folgenden Konzentrationen zu erreichen:
• 0,05-2,00 ppm Isoamylacetat, vorzugsweise 0,08-0,85 ppm, noch bevorzugter 0,27-0,65 ppm, am bevorzugtesten 0,31-0,49 ppm;
• 0,01-0,10 ppm Ethylbutyrat, vorzugsweise 0,02-0,05 ppm, noch bevorzugter 0,03-0,04 ppm;
• 0,01-0,05 ppm Ethylhexanoat, vorzugsweise 0,015-0,04 ppm, noch bevorzugter 0,02-0,03 ppm, am bevorzugtesten 0,023-0,027 ppm; und
• 5,00-30,00 ppm (Iso)amylalkohol, vorzugsweise 10,40-23,55 ppm, noch bevorzugter 12,00-22,00 ppm, am bevorzugtesten 14,00-20,00 ppm.

8. Verfahren nach einem der Ansprüche 5 bis 7, wobei der Ethylacetatgehalt in dem Getränk modifiziert wird, um eine Ethylacetatkonzentration zwischen 8,00 und 28,00, vorzugsweise zwischen 13,20 und 22,00, noch bevorzugter zwischen 15,00 und 20,00 ppm zu erhalten.

9. Verfahren nach einem der Ansprüche 5 bis 8, wobei die Gehalte, die in dem in Schritt (a) vorbereiteten Getränk erhalten wurden, für die folgenden Verbindungen gemessen werden: Phenylethylacetat, Phenylalkohol, Isobutanol und Propanol, und die Gehalte an jeder der vorstehenden Verbindungen durch Zusetzen oder Extrahieren modifiziert werden, um die folgenden Konzentrationen zu erreichen:
• 0,005-0,4 ppm Phenylethylacetat, vorzugsweise 0,05-0,15 ppm;
• 0,85-5,00 ppm Phenylethylalkohol;
• 1,65-5,05 ppm Isobutanol;
• 3,80-24,00 ppm Propanol.

10. Verfahren nach einem der Ansprüche 5 bis 9, wobei das Getränk auf Malzbasis in Schritt (a) durch Entalkoholisieren von alkoholischem Bier, durch Verdampfen, vorzugsweise Vakuumverdampfen, erhalten wird und wobei ein Teil der Dampfphase, ausschließlich Ethanol, kondensiert wird und wobei das Zusetzen von aromatisierenden Verbindungen von Schritt (c) durch Zusetzen mindestens eines Teils des Kondensats zu dem Getränk auf Malzbasis und wahlweise durch weiteres Zusetzen einzelner Aromaverbindungen erzielt wird.

## Revendications

1. Boisson à base de malt fermenté sans alcool ou à faible teneur en alcool ayant une teneur en alcool d'au plus 1,0 % en volume, de préférence au plus 0,7 % en volume, comprenant des esters et alcools supérieurs définissant un profil d'arôme proche d'une bière blonde, dans laquelle un alcool supérieur est un alcool ayant une masse moléculaire supérieure à l'éthanol, **caractérisée en ce qu'**elle comprend (a) 7,00 à 30,00 ppm d'acétate d'éthyle et (b) 0,01 à 0,20 ppm de butyrate d'éthyle.

2. Boisson selon la revendication 1, comprenant un ou plusieurs des esters suivants :
(c) 0,05 à 2,00 ppm d'acétate d'isoamyle ;
(d) 0,01 à 0,05 ppm d'hexanoate d'éthyle.

3. Boisson selon les revendications précédentes, comprenant un ou plusieurs des esters suivants :
(a) 8,00 à 28,00 ppm d'acétate d'éthyle, de préférence 13,00 à 22,00 ppm, de manière davantage préférée 15,00 à 20,00 ppm ;
(b) 0,01 à 0,10 ppm de butyrate d'éthyle, de préférence 0,02 à 0,05 ppm, de manière davantage préférée 0,028 à 0,045 ppm, de manière encore davantage préférée 0,03 - 0,04 ppm ;
(c) 0,08 à 0,85 ppm d'acétate d'isoamyle, de préférence 0,27 à 0,65 ppm, de manière davantage préférée 0,31 à 0,49 ppm ;
(d) 0,015 à 0,04 ppm d'hexanoate d'éthyle, de préférence 0,02 à 0,03 ppm, de manière davantage préférée 0,023 à 0,027ppm ;
et l'alcool supérieur suivant :
(w) 5,00 à 30,00 ppm d'alcool (iso)amylique, de préférence 10,00 à 25,00 ppm, de manière davantage préférée 12,00 à 22,00 ppm, de manière encore davantage préférée 14,00 à 20,00 ppm, dans lequel l'alcool (iso)amylique est défini comme la somme de 3-méthyl butanol et de 2-méthyl butanol, et dans lequel un alcool supérieur est défini comme un alcool ayant une masse moléculaire supérieure à l'éthanol.

4. Boisson selon la revendication 1 ou 2, comprenant en outre l'ester suivant :
(e) 0,005 à 0,4 ppm d'acétate de phényléthyle, de préférence 0,05 à 0,15 ppm ;
et un ou plus des alcools supérieurs suivants :
(x) 0,85 à 5,00 ppm d'alcool phényléthylique ;
(y) 1,65 à 5,05 ppm d'isobutanol ;
(z) 3,80 à 24,00 ppm de propanol.

5. Procédé de production d'une boisson à base de malt fermenté sans alcool ou à faible teneur en alcool ayant une teneur en alcool d'au plus 1,0 % en volume, de préférence au plus 0,7 % en volume, et ayant un profil d'arôme proche des bières blondes, ledit procédé comprenant les étapes suivantes :
(a) Préparation d'une boisson à base de malt ayant une teneur en alcool d'au plus 1,0 % en volume, de préférence d'au plus 0,7 % en volume par fermentation d'une suspension de malt ;
(b) Mesure de la teneur en acétate d'éthyle et en butyrate d'éthyle dans la boisson ainsi obtenue ; et
(c) Addition à ou extraction de ladite boisson :
• d'acétate d'éthyle jusqu'à obtention d'une teneur en acétate d'éthyle comprise entre 7,00 et 30,00 ppm, et
• de butyrate d'éthyle jusqu'à obtention d'une teneur en butyrate d'éthyle comprise entre 0,01 et 0,20 ppm.

6. Procédé selon la revendication précédente, dans lequel une teneur en alcool d'au plus 1,0 % en volume, de préférence au plus 0,7 % en volume, dans la boisson préparée à l'étape (a) est obtenue en arrêtant le processus de fermentation, ou en extrayant de l'éthanol d'une boisson fermentée.

7. Procédé selon la revendication 5 ou 6, dans lequel les teneurs obtenues dans la boisson préparée à l'étape (a) sont mesurées pour les composés suivants : acétate d'isoamyle, butyrate d'éthyle, hexanoate d'éthyle, et alcool (iso)-amylique, dans lequel l'alcool (iso)amylique est défini comme la somme de 3-méthyl butanol et de 2-méthyl butanol et les teneurs de chacun des composés précédents sont modifiées par addition ou par extraction de façon à atteindre les concentrations suivantes :
• 0,05 à 2,00 ppm d'acétate d'isoamyle, de préférence 0,08 à 0,85 ppm, de manière davantage préférée 0,27 à 0,65 ppm, de manière encore davantage préférée 0,31 à 0,49 ppm ;
• 0,01 à 0,10 ppm de butyrate d'éthyle, de préférence 0,02 à 0,05 ppm, de manière davantage préférée 0,03 à 0,04 ppm ;
• 0,01 à 0,05 ppm d'hexanoate d'éthyle, de préférence 0,015-0,04 ppm, de manière davantage préférée 0,02 - 0,03 ppm, de manière encore davantage préférée 0,023-0,027 ppm ; et
• 5,00 à 30,00 ppm d'alcool (iso)amylique, de préférence 10,40-23,55 ppm, de manière davantage préférée 12,00-22,00 ppm, de manière encore davantage préférée 14,00-20,00 ppm.

8. Procédé selon l'une quelconque des revendications 5 à 7, dans lequel la teneur en acétate d'éthyle dans la boisson est modifiée de façon à obtenir une concentration d'acétate d'éthyle comprise entre 8,00 et 28,00, de préférence entre 13,20 et 22,00, de manière davantage préférée entre 15,00 et 20,00 ppm.

9. Procédé selon l'une quelconque des revendications 5 à 8, dans lequel les teneurs obtenues dans la boisson préparée à l'étape (a) sont mesurées pour les composés suivants : acétate de phényléthyle, alcool phénylique, isobutanol et propanol, et les teneurs de chacun des composés précédents sont modifiées par addition ou extraction de façon à atteindre les concentrations suivantes :
• 0,005 à 0,4 ppm d'acétate de phényléthyle, de préférence 0,05 à 0,15 ppm ;
• 0,85 à 5,00 ppm d'alcool phényléthylique ;
• 1,65-5,05 ppm d'isobutanol ;
• 3,80 à 24,00 ppm de propanol.

10. Procédé selon l'une quelconque des revendications 5 à 9, dans lequel la boisson à base de malt est obtenue dans l'étape (a) par désalcoolisation de bière alcoolisée, par évaporation, de préférence par évaporation sous vide, et dans lequel une partie de la phase vapeur, à l'exclusion de l'éthanol, est condensée, et dans lequel l'addition des composés aromatisants de l'étape (c) est réalisée en ajoutant au moins une partie du condensat à la boisson à base de malt et, éventuellement, en ajoutant ultérieurement des composés aromatisants individuels.
